# EUROPÄISCHE PATENTSCHRIFT

(11) **EP 3 476 217 B1**
(45) Veröffentlichungstag und Bekanntmachung des Hinweises auf die Patenterteilung: **13.05.2020**
(21) Anmeldenummer: 18401084.1
(22) Anmeldetag: 16.10.2018
(51) Int. Cl.: A01M 7/00

(54) **VERTEILERGESTÄNGE FÜR EINE PFLANZENSCHUTZSPRITZE**
SPRAYBOOM FOR A CROP PROTECTION SPRAYER
RAMPE DE PULVÉRISATION POUR UN PULVÉRISATEUR

(30) Priorität: 27.10.2017 DE 102017125198
(43) Veröffentlichungstag der Anmeldung: 01.05.2019
(73) Patentinhaber: Amazonen-Werke H. Dreyer GmbH & Co. KG, 49205 Hasbergen (DE)
(72) Erfinder: Resch, Rainer, 49170 Hagen a TW (DE); Ehlen, Volker, 49205 Hasbergen (DE)

(56) Entgegenhaltungen:
- DE-C2- 4 413 739
- FR-A1- 2 439 625
- GB-A- 709 151
- US-A1- 2017 354 137

## Beschreibung

Die Erfindung betrifft ein Verteilergestänge für eine Pflanzenschutzspritze gemäß dem Oberbegriff des Patentanspruches 1.

Derartige Verteilergestänge für eine Pflanzenschutzspritze sind in der Praxis bekannt geworden. Diese Verteilergestänge sind mittels einer Höhenverstellungseinrichtung an dem Rahmen der Pflanzenschutzspritze angeordnet. An diesem Verteilergestänge sind in regelmäßigen Abständen, üblicher Weise in Abständen von entweder 50 cm oder 25 cm Spritzdüsen angeordnet. Diesen Spritzdüsen werden über Zubringleitungen die auszubringenden Flüssigkeiten zugeführt. Über die Spritzdüsen werden diese Flüssigkeiten in einstellbaren Mengen auf der zu behandelnden Bodenoberfläche oder den zu behandelnden Pflanzen ausgebracht.

Des Weiteren sind an dem Verteilergestänge an dessen Vorderseite mehrere beabstandet zueinander angeordnete Sensorelementen zur Unkrauterkennung und/oder des Unkrautgrades auf einer Feldfläche, auf der die von den Ausbringelementen auszubringende Flüssigkeit aufgebracht wird, angeordnet.

Die Spritzdüsen sind an dem Verteilergestänge ortsfest und höhenunveränderlich angeordnet. Aufgrund der erforderlichen "Reaktionszeit" können die Sensorelemente bezogen auf die Fahrtrichtung nicht auf gleicher Höhe mit den Düsen montiert werden. Damit die Sensorelemente vorausschauend die Gegebenheiten auf der zu bearbeitenden Fläche oder den zu behandelnden Pflanzenbestand erfassen können, müssten die Sensorelemente vorausschauend schräg am Verteilergestänge montiert werden. Hierfür geeignete Sensorelemente sind jedoch bislang auf dem Markt nicht verfügbar, insbesondere nicht für die Aufgabe der selektiven Unkrauterkennung.

Damit die Sensorelemente gegenüber den Spritzdüsen vorausschauend die zu bearbeitende Fläche oder den zu behandelnden Pflanzenbestand erfassen können, werden die relativ schweren Sensorelemente jeweils mittels eines am Verteilergestänge angeordneten Haltearmes im Abstand vor der Vorderseite des Verteilergestänges platziert. Aufgrund der relativ hohen Masse der Sensorelemente sowie der Notwendigkeit, die Verteilergestänge für den Transport zusammenklappen zu müssen, stellt sich diese Anordnung jedoch als sehr problematisch dar.

Ein weiteres derartiges Verteilergestänge ist in DE 44 13 739 C2 offenbart. Das Verteilergestänge erstreckt sich quer zur Fahrtrichtung, wobei die Sensorelemente in Fahrtrichtung vor den Ausbringelementen am Verteilergestänge angeordnet sind. Die Sensorelemente und die Ausbringelemente sind quer zur Fahrtrichtung im selben Abstand zueinander am Verteilergestänge angeordnet wie die Pflanzenreihen bzw. die Reihenzwischenräume.

Der Erfindung liegt die Aufgabe zu Grunde, eine einfache Montagemöglichkeit und Zuordnung der Sensorelemente mit ausreichendem Abstand, insbesondere in Fahrtrichtung gesehen zu den Spritzdüsen vorzuschlagen.

Diese Aufgabe wird erfindungsgemäß dadurch gelöst, dass die Ausbringelemente mit die Ausbringelemente tragenden Mitteln in einem Abstand von >20 cm zu dem unteren Bereich an dem Verteilergestänge angeordnet sind, dass diesen tragenden Mitteln die Ausbringelemente in verschiedenen Positionen verbringbare Mittel zugeordnet sind, und dass mittels der vorerwähnten Mittel die Ausbringelemente in eine sich in unmittelbarer Nähe zum Verteilergestänge und in einem Abstand >10 cm oberhalb der unteren Ebene des Verteilergestänges befindlichen Parkposition und in zumindest eine sich in einem Abstand von >20 cm hinter und/oder unterhalb der unteren und/oder hinteren Ebene des Verteilergestänges befindlichen Ausbringposition an dem Verteilergestänge in verbringbarer Weise angeordnet sind.

Infolge dieser Maßnahmen lassen sich die relativ leichten Spritzdüsen und deren zugeordneten Düsenkörper mit einem ausreichenden Abstand zu den möglichst nah am Verteilergestänge angeordneten Sensorelementen für und bei der Ausbringarbeit verbringen. Somit sind auch die Spritzdüsen durch die bewegliche Anordnung flexibel einsetzbar. Hier können sie zum Beispiel nach hinten für die online-Applikation und senkrecht nach unten für die Pflanzenschutzanwendung im späteren Wachstumsstadien verbracht werden. Somit ergibt sich eine vorteilhafte aufgelöste Anordnung der Spritzdüsen über die Spritzdüsen in verschiedene Positionen verbringbaren Mittel. Auch können diese verschwenkbaren Mitteln für die Transportstellung des Verteilergestänges sehr nah an das Verteilergestänge herangebracht werden.

Mit der schwenkbaren Anordnung der Spritzdüsen an dem Verteilergestänge können die Sensoren nah am Gestänge angeordnet werden. Die Spritzdüsen befinden sich über die beispielsweise als verschwenkbarer Halterung ausgebildeten Mittel in Fahrtrichtung hinter dem Gestänge, um eine "Reaktionszeit" zur Ansteuerung der Spritzdüse und somit eine Sicherung zur gewünschten Ausbringung der auszubringenden Flüssigkeit an der richtigen Position auf der zu behandeln Fläche und/oder Pflanzenbestand zu haben. Für die Transportstellung können die Spritzdüsen dann entsprechend an das Gestänge herangebracht werden.

Eine einfache Ausgestaltung der die als Spritzdüsen ausgebildeten Ausbringelemente tragenden Mittel wird dadurch erreicht, dass die die Ausbringelemente tragenden Mittel als mittels eines Gelenkes an dem Verteilergestänge verschwenkbar angeordnete stabförmige Halter ausgebildet sind, und dass die Ausbringelemente an dem dem jeweiligen Gelenk gegenüberliegenden Ende des jeweiligen stabförmigen Halters angeordnet sind.

Eine vorteilhafte Anordnung der Zubringleitungen zwischen dem Verteilergestänge und den Ausbringelementen wird dadurch erreicht, dass die Zubringleitungen zu den Ausbringelementen im Bereich der stabförmigen Halters in den stabförmigen Halter integriert und/oder an diesem angeordnet sind.

Eine einfache Positionierung der stabförmigen Halter und somit der Ausbringelemente wird dadurch erreicht, dass die Gelenke, mit denen die stabförmigen Halter an dem Verteilergestänge angeordnet sind, sich im Bereich der hinteren unteren Kante des Verteilergestänges befinden, dass die stabförmigen Halter sich in der Parkposition in einer aufrechten Position unmittelbar an den hinteren aufrechten Bereich des Verteilergestänges und sich in der Ausbringposition in einer sich nach hinten erstreckenden liegenden und/oder zumindest annähernd horizontalen Position befinden und/oder mittels motorischer Mittel in diese Positionen bringbar sind.

In einer anderen Ausführung ist für die einfache Positionierung der stabförmige Halter und somit der Ausbringelemente vorgesehen, dass die Gelenke, mit denen die stabförmigen Halter an dem Verteilergestänge angeordnet sind, sich im Bereich der hinteren unteren Kante des Verteilergestänges befinden, dass die stabförmigen Halter sich in der Parkposition in einer aufrechten Position unmittelbar an den hinteren aufrechten Bereich des Verteilergestänges und sich in der Ausbringposition in einer sich nach unten erstreckenden aufrechten und/oder zumindest annähernd vertikalen Position befinden und/oder mittels motorischer Mittel in diese Positionen bringbar sind.

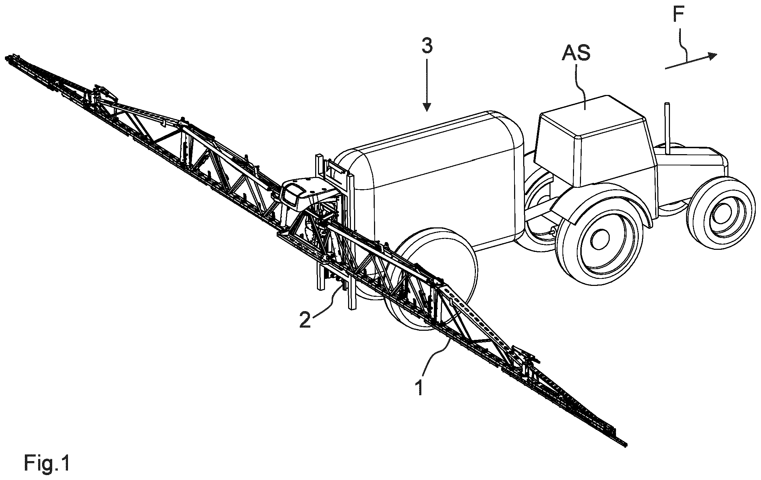

Weitere Einzelheiten der Erfindung sind der Beispielsbeschreibung und den Zeichnungen zu entnehmen. Die Zeichnungen zeigen
- Fig.1: ein an eine gezogene Pflanzenschutzspritze angeordnetes Verteilergestänge in perspektivischer Ansicht,
- Fig.2: das Verteilergestänge mit einer Anordnung eines Sensorelementes und der Anordnung der als Spritzdüsen ausgebildeten Ausbringelementen in Seitenansicht nach dem Stand der Technik und vergrößertem Maßstab,
- Fig.3: das Verteilergestänge mit einer Anordnung eines Sensorelementes und der Anordnung der als Spritzdüsen ausgebildeten Ausbringelementen in Seitenansicht nach einer ersten Ausgestaltung nach der Erfindung und vergrößertem Maßstab und
- Fig.4: das Verteilergestänge mit einer Anordnung eines Sensorelementes und der Anordnung der als Spritzdüsen ausgebildeten Ausbringelementen in Seitenansicht nach einer zweiten Ausgestaltung nach der Erfindung und vergrößertem Maßstab.

Das Verteilergestänge 1 ist in bekannter Weise mittels einer Höhenverstellungseinrichtung an dem Rahmen 2 der von Ackerschlepper AS gezogenen Pflanzenschutzspritze 3 angeordnet. An diesem Verteilergestänge 1 sind in regelmäßigen Abständen, in der Regel von entweder 50 cm oder 25 cm als Spritzdüsen 4 ausgebildete Ausbringelemente angeordnet. Diesen Spritzdüsen 4 werden über Zubringleitungen in bekannter und daher nicht näher erläuterter und dargestellter Weise die auszubringenden Flüssigkeiten zugeführt. Über die Spritzdüsen 4 werden diese Flüssigkeiten in einstellbaren Mengen auf der zu behandelnden Bodenoberfläche 5 oder den zu behandeln Pflanzen 6 in bekannter Weise ausgebracht.

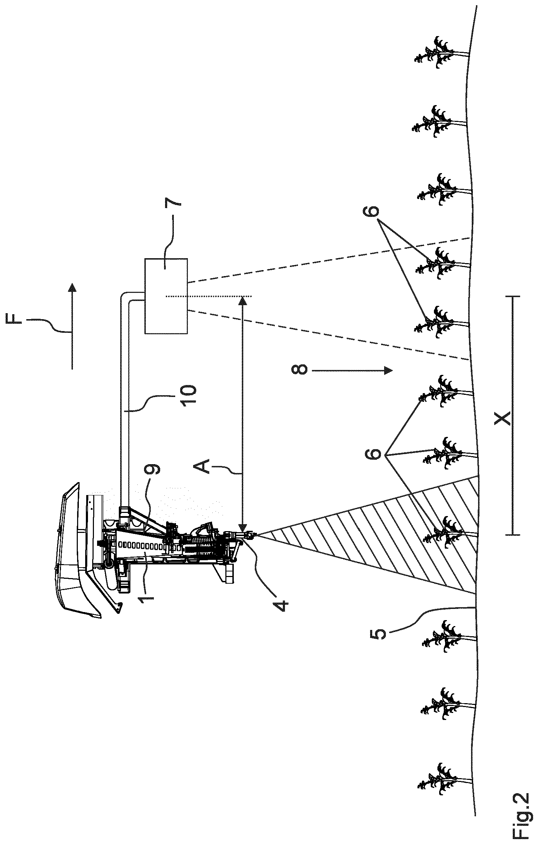

Des Weiteren sind an dem Verteilergestänge 1 an dessen Vorderseite mehrere beabstandet zueinander angeordnete Sensorelemente 7 zur Unkrauterkennung und/oder des Unkrautgrades auf einer mit Pflanzen 6 aufweisenden Bodenoberfläche 5, die auch als Feldfläche 8 zu bezeichnen, auf der die von den Ausbringelementen 4 auszubringende Flüssigkeit aufgebracht wird, angeordnet, wie in Fig.2 dargestellt ist. Es sind mehrere Sensorelemente 7 verteilt und beabstandet zueinander auf der Vorderseite 9 des Verteilergestänges 1 an dem Verteilergestänge 1 jeweils mittels eines Haltearmes 10 befestigt.

Die Spritzdüsen 4 sind nach dem Stand der Technik gemäß Fig.2 an dem Verteilergestänge 1 ortsfest und höhenunveränderlich angeordnet. Aufgrund der erforderlichen "Reaktionszeit" sind die Sensorelemente 7 bezogen auf die Fahrtrichtung F nicht auf gleicher Höhe mit den Spritzdüsen 4 montiert. Damit die Sensorelemente 7 vorausschauend die Gegebenheiten auf der zu bearbeitenden Feldfläche 8 oder des zu behandelnden Pflanzenbestandes mit den Pflanzen 6 erfassen können, sind die Sensorelemente 7 zur vorausschauenden Erfassung der Pflanzen 6 bzw. der Feldfläche mittels des Halterarmes 10 in einem Abstand A vor den Spritzdüsen 4 am Verteilergestänge 1 montiert. Aufgrund der relativ hohen Masse der Sensorelemente 7 sowie der Notwendigkeit, das Verteilergestänge 1 für den Transport zusammen klappen zu müssen, bereitet diese Anordnung bei dem Bringen in die Transportstellung Probleme.

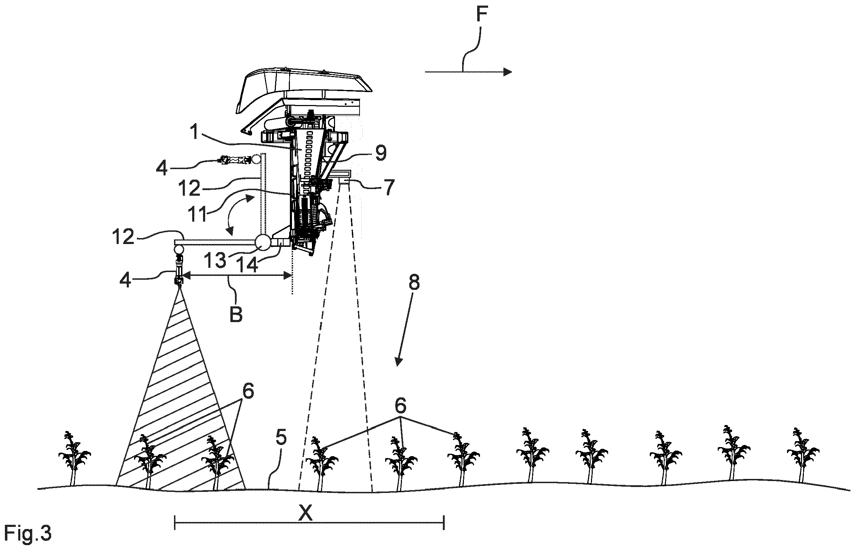

Um diesen abzuhelfen sind bei der erfindungsgemäßen Ausgestaltung und Anordnung der Sensorelemente 7 und der Spritzdüsen 4 der erfindungsgemäßen Anordnung nach Fig.3 die Sensorelemente 7 in unmittelbarer Nähe auf der Vorderseite 9 Verteilergestänges 1 befestigt, während die Spritzdüsen 4 in einem Abstand B hinter dem Verteilergestänge 1 über einen an der Hinterseite bzw. hinteren Ebene 11 des Verteilergestänges 1 befestigten stabförmigen Halter 12, der die als Spritzdüsen 4 ausgebildeten Ausbringelemente tragenden Mitteln ausgebildet ist, angeordnet sind.

Die jeweiligen Spritzdüsen 4 mit den Spritzdüsen 4 jeweils tragenden stabförmigen Haltern 12 sind in einem Abstand B von >20 cm zu dem unteren Bereich des Verteilergestänges 1 an dem Verteilergestänge 1 angeordnet. Der stabförmige Halter 12 ist mittels eines Gelenkes 13 an dem Verteilergestänge 1 befestigt. Zwischen dem Gelenk 13 bzw. zwischen dem stabförmigen Halter 12 und dem Verteilergestänge 1 sind nicht dargestellte Stellmittel, die vorzugsweise motorisch ausgebildet sind, um den stabförmigen Halter 12 mit den Spritzdüsen 4 aus der mit durchzogenen Linien dargestellten Ausbringposition in die mit gestrichelten Linien dargestellte Transportposition zu verbringen, zugeordnet. Somit sind die Spritzdüsen 4 mit den stabförmigen Haltern 12 in verschiedene Positionen zu verbringen. Mittels der vorerwähnten Mittel sind die als Spritzdüsen 4 ausgebildeten Ausbringelemente in eine sich in unmittelbarer Nähe zum Verteilergestänge 1 und in einem Abstand >10 cm oberhalb der unteren Ebene des Verteilergestänges 1 befindlichen Parkposition und/oder Parkposition und in zumindest eine sich in einem Abstand von >20 cm hinter der hinteren Ebene des Verteilergestänges 1 befindlichen Ausbringposition an dem Verteilergestänge 1 in verbringbarer Weise angeordnet.

Die die als Spritzdüsen 4 ausgebildeten Ausbringelemente tragenden Mittel 12 sind als mittels eines Gelenkes 13 an dem Verteilergestänge 1 verschwenkbar angeordnete stabförmige Halter 12 ausgebildet. Die Ausbringelemente 4 sind an dem dem jeweiligen Gelenk 13 gegenüberliegenden Ende des jeweiligen stabförmigen Halters 12 angeordnet. Das Gelenk 13 für den Halter 12 ist mit einem Zwischenarm 14 am Verteilergestänge 1 angeordnet.

In nicht dargestellter Weise sind die Zubringleitungen zu den Spritzdüsen 4 im Bereich der stabförmigen Halters 12 in den stabförmigen Halter 12 integriert und/oder an diesem angeordnet. Die Gelenke 13, mit denen die stabförmigen Halter 12 an dem Verteilergestänge 1 angeordnet sind, befinden sich im Bereich der hinteren unteren Kante des Verteilergestänges 1. Die stabförmigen Halter 12 befinden sich in der Parkposition in einer aufrechten Position unmittelbar an den hinteren aufrechten Bereich des Verteilergestänges 1 und in der Ausbringposition diese sich in einer sich nach hinten erstreckenden liegenden und/oder zumindest annähernd horizontalen Position befinden und können vorzugsweise mittels motorischer Mittel in diese Positionen bringbar sein, wie die Fig.3 zeigt.

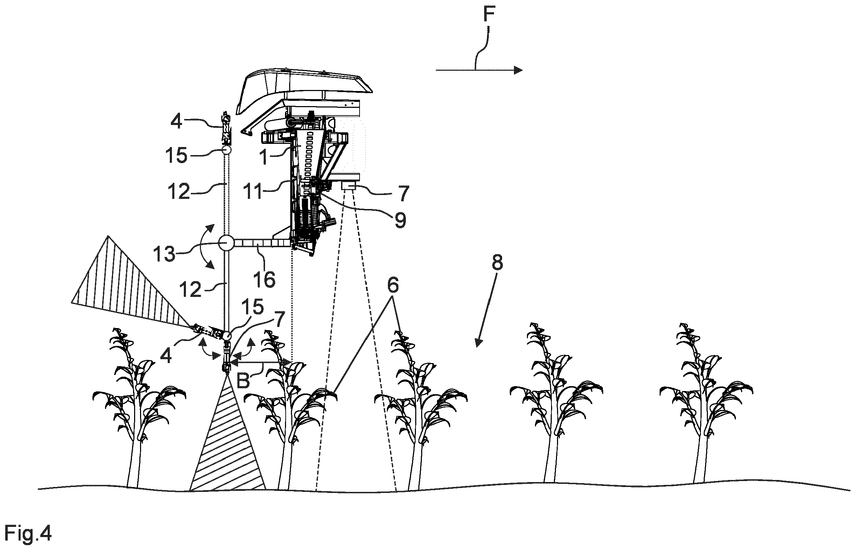

Gegenüber dem vorstehend beschriebenen Ausführungsbeispiel nach Fig.3 ist bei dem Ausführungsbeispiel gemäß Fig.4 der jeweilige stabförmige Halter 12, an dem die Spritzdüsen 4 befestigt sind, über ein Gelenk 13 an dem Verteilergestänge 1 befestigt. Auch die Spritzdüse 4 ist mittels eines Schwenkgelenkes 15 an dem stabförmigen Halter 12 befestigt, so dass in Ausbringposition zumindest in die beiden in Fig. 4 dargestellten Positionen, auch mittels zugeordneter motorischer Mittel verbracht werden können.

Dem Gelenk 13 bzw. zwischen dem stabförmigen Halter 12 und dem Verteilergestänge 1 sind nicht dargestellte Stellmittel, die vorzugsweise motorisch ausgebildet sind, um die stabförmigen Halter 12 mit den Spritzdüsen 4 aus der mit durchzogenen Linien dargestellten Ausbringposition in die mit gestrichelten Linien dargestellte Transportposition zu verbringen, zugeordnet.

Hierbei befinden sich die Gelenke 13, mit denen die stabförmigen Halter 12 an dem Verteilergestänge 1 angeordnet sind, im Bereich der hinteren unteren Kante des Verteilergestänges 1, jedoch gemäß diesem Ausführungsbeispiel durch den Zwischenhalter 16 beabstandet zu der hinteren Seite 11 des Verteilergestänges 1. Die stabförmigen Halter 12 befinden sich in der Parkposition in einer aufrechten Position unmittelbar an der hinteren aufrechten Ebene 11 des Verteilergestänges 1, wie durch die mit gestrichelten Linien dargestellte Position des stabförmigen Halters 12 mit der Spritzdüse 4 dargestellt ist. In der Ausbringposition befindet sich der jeweilige stabförmige Halter 12 mit der jeweiligen Spritzdüse 4 in einer sich nach unten erstreckenden aufrechten, also zumindest annähernd vertikalen Position. Sowohl stabförmige Halter 12 wie auch Spritzdüsen 4 können jeweils mittels motorischer Mittel in diese Positionen bringbar sein.

## Patentansprüche

1. Verteilergestänge (1) für eine Pflanzenschutzspritze, wobei sich das Verteilergestänge (1) quer zur Fahrtrichtung (F) der Pflanzenschutzspritze erstreckt und in seinem unteren Bereich vorzugsweise als Spritzdüsen (4) ausgebildete Ausbringelemente, denen über Zubringleitungen die auszubringende Flüssigkeit zugeführt wird und diese Flüssigkeit in einstellbarer Weise ausbringen, angeordnet sind, und mit mehreren beabstandet zueinander an der Vorderseite (9) des Verteilergestänges (1) angeordneten Sensorelementen (7) zur Unkrauterkennung und/oder des Unkrautgrades auf einer Feldfläche (8), auf der die von den Ausbringelementen (4) auszubringende Flüssigkeit aufgebracht wird, **dadurch gekennzeichnet, dass** die Ausbringelemente (4) mit die Ausbringelemente (4) tragenden Mitteln (12,14,16) in einem Abstand von >20 cm zu dem unteren Bereich an dem Verteilergestänge (1) angeordnet sind, dass diesen tragenden Mitteln (12,14,16) die Ausbringelemente (4) in verschiedenen Positionen verbringbare Mittel (12,13) zugeordnet sind, und dass mittels der vorerwähnten Mittel die Ausbringelemente (4) in eine sich in unmittelbarer Nähe zum Verteilergestänge (1) und in einem Abstand >10 cm oberhalb der unteren Ebene des Verteilergestänges (1) befindlichen Parkposition und in zumindest eine sich in einem Abstand von >20 cm hinter der hinteren Ebene (11) und/oder unterhalb der unteren Ebene des Verteilergestänges (1) befindlichen Ausbringposition an dem Verteilergestänge (1) verbringbar angeordnet sind.

2. Verteilergestänge nach Anspruch 1, **dadurch gekennzeichnet, dass** die die Ausbringelemente (4) tragenden Mittel (12,14,16) als mittels eines Gelenkes (13) an dem Verteilergestänge (1) verschwenkbar angeordnete stabförmige Halter (12) ausgebildet sind, und dass die Ausbringelemente (4) an dem dem jeweiligen Gelenk (13) gegenüberliegenden Ende des jeweiligen stabförmigen Halters (12) angeordnet sind.

3. Verteilergestänge nach Anspruch 2, **dadurch gekennzeichnet, dass** die Zubringleitungen zu den Ausbringelementen (4) im Bereich der stabförmigen Halters (12) in den stabförmigen Halter (12) integriert und/oder an diesem angeordnet sind.

4. Verteilergestänge nach Anspruch 2 oder 3, **dadurch gekennzeichnet, dass** die Gelenke (13), mit denen die stabförmigen Halter (12) an dem Verteilergestänge (1) angeordnet sind, sich im Bereich der hinteren unteren Kante des Verteilergestänges (1) befinden, dass die stabförmigen Halter (12) sich in der Parkposition in einer aufrechten Position unmittelbar an den hinteren aufrechten Bereich des Verteilergestänges (1) und sich in der Ausbringposition in einer sich nach hinten erstreckenden liegenden und/oder zumindest annähernd horizontalen Position befinden und/oder mittels motorischer Mittel in diese Positionen bringbar sind.

5. Verteilergestänge nach Anspruch 2 oder 3, **dadurch gekennzeichnet, dass** die Gelenke (13), mit denen die stabförmigen Halter (12) an dem Verteilergestänge (1) angeordnet sind, sich im Bereich der hinteren unteren Kante des Verteilergestänges (1) befinden, dass die stabförmigen Halter (12) sich in der Parkposition in einer aufrechten Position unmittelbar an den hinteren aufrechten Bereich des Verteilergestänges (1) und sich in der Ausbringposition in einer sich nach unten erstreckenden aufrechten und/oder zumindest annähernd vertikalen Position befinden und/oder mittels motorischer Mittel in diese Positionen bringbar sind.

## Claims

1. Distributor boom (1) for a crop protection sprayer, wherein the distributor boom (1) extends transversely to the direction of travel (F) of the crop protection sprayer, and dispensing elements are arranged in its lower region, which are preferably in the form of spray nozzles (4), to which the liquid to be dispensed is fed via feed lines and which dispense this liquid in a settable manner, and having a plurality of sensor elements (7), arranged in a spaced-apart manner on the front side (9) of the distributor boom (1), for weed detection and/or identifying the weed density over a field area (8) to which the liquid to be dispensed by the dispensing elements (4) is applied, **characterized in that** the dispensing elements (4), having means (12, 14, 16) carrying the dispensing elements (4), are arranged on the distributor boom (1) at a distance of >20 cm from the lower region, **in that** these carrying means (12, 14, 16) are assigned means (12, 13) that can move the dispensing elements (4) into different positions, and **in that**, by means of the abovementioned means, the dispensing elements (4) are arranged so as to be movable into a parked position located in the immediate vicinity of the distributor boom (1) and at a distance of >10 cm above the lower plane of the distributor boom (1) and into at least one dispensing position, located at a distance of >20 cm behind the rear plane (11) and/or below the lower plane of the distributor boom (1), on the distributor boom (1).

2. Distributor boom according to Claim 1, **characterized in that** the means (12, 14, 16) carrying the dispensing elements (4) are configured as bar-like holders (12) arranged on the distributor boom (1) in a pivotable manner by means of a joint (13), and **in that** the dispensing elements (4) are arranged at the opposite end of the respective bar-like holder (12) from the respective joint (13).

3. Distributor boom according to Claim 2, **characterized in that** the feed lines to the dispensing elements (4) are integrated into and/or arranged on the bar-like holder (12) in the region of the bar-like holder (12).

4. Distributor boom according to Claim 2 or 3, **characterized in that** the joints (13), by way of which the bar-like holders (12) are arranged on the distributor boom (1), are located in the region of the rear lower edge of the distributor boom (1), **in that** the bar-like holders (12) are located, in the parked position, in an upright position immediately at the rear upright region of the distributor boom (1) and, in the dispensing position, in a lying position, extending toward the rear, and/or an at least approximately horizontal position, and/or are able to be moved into these positions by means of motorized means.

5. Distributor boom according to Claim 2 or 3, **characterized in that** the joints (13), by way of which the bar-like holders (12) are arranged on the distributor boom (1), are located in the region of the rear lower edge of the distributor boom (1), **in that** the bar-like holders (12) are located, in the parked position, in an upright position immediately at the rear upright region of the distributor boom (1) and, in the dispensing position, in an upright position, extending downward, and/or an at least approximately vertical position, and/or are able to be moved into these positions by means of motorized means.

## Revendications

1. Rampe de distribution (1) pour un pulvérisateur de produits phytosanitaires, la rampe de distribution (1) s'étendant transversalement à la direction d'avance (F) du pulvérisateur de produits phytosanitaires et, dans sa région inférieure, étant disposés des éléments d'épandage réalisés de préférence sous forme de buses de pulvérisation (4) auxquels est acheminé, par le biais de conduites d'alimentation, le liquide à épandre, et qui épandent ce liquide de manière ajustable, et comprenant plusieurs éléments de capteurs (7) disposés à distance les uns des autres sur le côté avant (9) de la rampe de distribution (1), pour détecter les mauvaises herbes et/ou la quantité de mauvaises herbes sur une surface de champ (8) sur laquelle est appliqué le liquide à épandre par les éléments d'épandage (4), **caractérisée en ce que** les éléments d'épandage (4) sont disposés, avec des moyens (12, 14, 16) de support des éléments d'épandage (4), à une distance supérieure à 20 cm de la région inférieure au niveau de la rampe de distribution (1), **en ce que** des moyens (12, 13) pouvant amener les éléments d'épandage (4) dans différentes positions sont associés à ces moyens de support (12, 14, 16), et **en ce qu'**à l'aide desdits moyens, les éléments d'épandage (4) sont disposés de manière à pouvoir être amenés dans une position de stationnement se trouvant à proximité immédiate de la rampe de distribution (1) et à une distance supérieure à 10 cm au-dessus du plan inférieur de la rampe de distribution (1) et dans au moins une position d'épandage au niveau de la rampe de distribution (1), se trouvant à une distance supérieure à 20 cm derrière le plan arrière (11) et/ou en dessous du plan inférieur de la rampe de distribution (1).

2. Rampe de distribution selon la revendication 1, **caractérisée en ce que** les moyens (12, 14, 16) de support des éléments d'épandage (4) sont réalisés sous forme de supports (12) en forme de barre disposés de manière à pouvoir pivoter au moyen d'une articulation (13) au niveau de la rampe de distribution (1), et **en ce que** les éléments d'épandage (4) sont disposés au niveau de l'extrémité du support respectif en forme de barre (12) qui est opposée à l'articulation respective (13) .

3. Rampe de distribution selon la revendication 2, **caractérisée en ce que** les conduites d'alimentation aux éléments d'épandage (4) sont disposées dans la région du support en forme de barre (12) sous forme intégrée dans le support en forme de barre (12) et/ou au niveau de celui-ci.

4. Rampe de distribution selon la revendication 2 ou 3, **caractérisée en ce que** les articulations (13) au moyen desquelles les supports en forme de barre (12) sont disposés au niveau de la rampe de distribution (1) se trouvent dans la région de l'arête arrière inférieure de la rampe de distribution (1), **en ce que** les supports en forme de barre (12) se trouvent, dans la position de stationnement, dans une position redressée directement au niveau de la région arrière redressée de la rampe de distribution (1) et, dans la position d'épandage, se trouvent dans une position couchée et/ou au moins approximativement horizontale s'étendant vers l'arrière et/ou peuvent être amenés dans ces positions par des moyens motorisés.

5. Rampe de distribution selon la revendication 2 ou 3, **caractérisée en ce que** les articulations (13) avec lesquelles les supports en forme de barre (12) sont disposés au niveau de la rampe de distribution (1) se trouvent dans la région de l'arête arrière inférieure de la rampe de distribution (1), **en ce que** les supports en forme de barre (12), dans la position de stationnement, se trouvent dans une position redressée directement au niveau de la région arrière redressée de la rampe de distribution (1), et, dans la position d'épandage, se trouvent dans une position redressée et/ou au moins approximativement verticale s'étendant vers le bas et/ou peuvent être amenés dans ces positions à l'aide de moyens motorisés.
